# EUROPEAN PATENT APPLICATION

(11) **EP 4 813 557 A1**
(43) Date of publication of application: **30.09.2026**
(21) Application number: 24892916.8
(22) Date of filing: 15.08.2024
(51) Int. Cl.: B23K 20/10, H01M 50/566

(54) **BILATERAL DUAL-ULTRASONIC ROLL WELDING SYSTEM FOR COMPOSITE CURRENT COLLECTOR**

(30) Priority: 20.11.2023 CN 202311551146
(71) Applicant: Sheng Dong Li (Guangzhou) Ultrasonic Electronic Equipment Co., Ltd., Guangzhou, Guangdong 510940 (CN)
(72) Inventor: YAN, Zhuosheng, Guangzhou, Guangdong 510940 (CN); YAN, Zhuoli, Guangzhou, Guangdong 510940 (CN); ZHONG, Xingtao, Guangzhou, Guangdong 510940 (CN); HE, Yanmiao, Guangzhou, Guangdong 510940 (CN); LIN, Jianhong, Guangzhou, Guangdong 510940 (CN); TAN, Jinbao, Guangzhou, Guangdong 510940 (CN)
(74) Representative: Cabinet Chaillot
(86) International application number: PCT/CN2024/112399
(87) International publication number: WO 2025/107754

(57) **Abstract**

The present invention discloses a composite current collector double-sided double ultrasonic roller welding system, comprising a film unwinding mechanism, a foil unwinding mechanism, a roller pressing and flattening mechanism, an ultrasonic roller welding mechanism, and a winding mechanism. An edge alignment mechanism and a plurality of guide rollers are respectively provided between the film unwinding mechanism/foil unwinding mechanism and the roller pressing and flattening mechanism. The film unwinding mechanism and the foil unwinding mechanism respectively deliver a film and a foil, which are subjected to edge alignment adjustment by the edge alignment mechanism and stretched and flattened by the guide rollers, after which they are pressed together by a front roller pressing and flattening mechanism. Subsequently, the ultrasonic roller welding mechanism performs welding to form a composite current collector film, which is then wound up by the winding mechanism. The present solution employs ultrasonic roller welding machines to perform double-sided welding on the film, forming a double-sided, double-surfaced foil-reinforced composite current collector. This enables a single device to achieve the work efficiency of two older welding devices, saving plant floor space and achieving the purpose of reducing production costs.

## Description

### FIELD OF THE INVENTION

The present invention relates to the technical field of ultrasonic welding, and specifically to a composite current collector double-sided double ultrasonic roller welding system.

### BACKGROUD OF THE INVENTION

Composite current collectors are one of the indispensable electrode materials for lithium-ion batteries, possessing the important functions of carrying active materials (supporting property) and collecting micro-currents (conductivity). However, because the composite current collector includes an insulating film layer formed of a polymer material, the tabs of the composite current collector cannot output the current from the cell core to the electrode terminals. This necessitates welding foils to the tabs of the composite current collector to conduct the current out of the cell core.

Chinese Invention Patent Application with Publication No. CN116765583A discloses an automatic welding system for multi-layer structured electrode sheet tabs, which is actually a composite current collector ultrasonic roller welding system. It comprises an A-side foil unwinding mechanism, a composite current collector unwinding mechanism, a B-side foil unwinding mechanism, a coil material merging mechanism, an ultrasonic roller welding mechanism, a weld mark flattening mechanism, an active traction mechanism, and a winding mechanism. After the A-side foil output by the A-side foil unwinding mechanism, the composite current collector output by the composite current collector unwinding mechanism, and the B-side foil output by the B-side foil unwinding mechanism are merged and aligned at the coil material merging mechanism, two-sided roller welding is performed by the ultrasonic roller welding mechanism, welding the A-side foil and the B-side foil respectively onto the A and B sides of the tab end of the composite current collector to form a two-sided foil-reinforced composite current collector. The weld mark flattening mechanism flattens the weld marks on the two-sided foil-reinforced composite current collector, the active traction mechanism provides power for the movement of the two-sided foil-reinforced composite current collector, and the winding mechanism winds up the two-sided foil-reinforced composite current collector. This solution achieves welding of the A-side foil and the B-side foil onto the A and B sides of the tab end of the composite current collector respectively using a single ultrasonic roller welding mechanism in conjunction with a coil material merging mechanism. The unwinding/winding mechanisms cooperate with the active traction mechanism, tension control mechanism, and unwinding/winding coil alignment sensors to control the movement of the coil material, resulting in stable welding speed and precise positioning, thereby improving welding quality and speed.

Chinese Invention Patent Application with Publication No. CN116765688A discloses a PLC-based current collector tab welding system and welding method, including a PLC programmable logic controller, a servo controller, an edge alignment control module, a tension control module, a touch screen, a welding machine controller, and a welding machine. The PLC programmable logic controller is respectively connected to the servo controller, the edge alignment control module, the tension control module, and the touch screen. The welding machine controller is respectively connected to the touch screen and the welding machine. The servo controller is respectively connected to an A-side unwinding motor, a B-side unwinding motor, a current collector unwinding motor, an upper welding roller motor, a leveling roller motor, a traction roller motor, and a winding motor. This solution achieves standardized and modular production of current collector tab welding.

As can be seen from the above, current processes for current collector welding are quite diverse. However, current welding systems in production generally use polymer film substrates with a width specification of 300mm, whereas the production specification for polymer film substrates on the market is generally 600mm. This requires cutting the substrate before welding, which tends to slow down production efficiency. If a single device can perform welding on both sides of the substrate before cutting, production efficiency can be effectively improved. Using just one welding device can achieve the efficiency of two older welding devices synchronously, saving plant floor space and achieving the purpose of reducing production costs.

### SUMMARY OF THE INVENTION

The objective of the present invention, based on the deficiencies present in the prior art described above, is to provide a composite current collector double-sided double ultrasonic roller welding system capable of improving welding efficiency and quality.

The technical solution adopted by the present invention to solve its technical problems is: a composite current collector double-sided double ultrasonic roller welding system, includes a film unwinding mechanism, a foil unwinding mechanism, a roller pressing and flattening mechanism, an ultrasonic roller welding mechanism, and a winding mechanism. An edge alignment mechanism and a plurality of guide rollers are respectively provided between the film unwinding mechanism/foil unwinding mechanism and the roller pressing and flattening mechanism; the film unwinding mechanism and the foil unwinding mechanism respectively deliver a film and a foil, which are subjected to edge alignment adjustment by the edge alignment mechanism and stretched and flattened by the guide rollers, after which they are pressed together by the roller pressing and flattening mechanism; subsequently, the ultrasonic roller welding mechanism performs welding to form a composite current collector film, which is then wound up by the winding mechanism.

Furthermore, the ultrasonic roller welding mechanism comprises two ultrasonic roller welding machines oppositely arranged on two sides of the film. Each of the ultrasonic roller welding machines comprises a roller welding machine housing, and an upper roller welding assembly, a lower roller welding assembly, an upper driving device, and a lower driving device mounted on the roller welding machine housing. The upper roller welding assembly comprises an upper roller welding die, an upper ultrasonic generator, an upper ultrasonic transducer, an upper ultrasonic horn, and an upper roller welding motor. The lower roller welding assembly comprises a lower roller welding die, a lower ultrasonic generator, a lower ultrasonic transducer, a lower ultrasonic horn, and a lower roller welding motor. The upper ultrasonic generator is connected to the upper roller welding die via the upper ultrasonic transducer and the upper ultrasonic horn. The lower ultrasonic generator is connected to the lower roller welding die via the lower ultrasonic transducer and the lower ultrasonic horn. The upper roller welding motor and the lower roller welding motor are respectively connected to and drive the upper roller welding die and the lower roller welding die to rotate in different directions. The lower roller welding die is positioned directly below the upper roller welding die, and a welding gap for clamping the composite current collector is provided between the upper roller welding die and the lower roller welding die. A vertically arranged machine housing guide rail is further mounted on the roller welding machine housing. The upper roller welding assembly and the lower roller welding assembly are respectively mounted on the machine housing guide rail via an upper sliding seat and a lower sliding seat. The upper driving device and the lower driving device are respectively connected to and capable of driving the upper sliding seat and the lower sliding seat to slide up and down along the machine housing guide rail, thereby adjusting the welding gap between the upper roller welding die and the lower roller welding die to accommodate welding composite current collectors of different thicknesses.

Furthermore, the upper driving device and the lower driving device preferably employ air cylinders, offering the advantages of small size and cleanliness; they could also be hydraulic cylinders or linear reciprocating mechanisms driven by motor connections.

Furthermore, a limit rod is mounted on the upper sliding seat and the lower sliding seat, and a limit block abutting against the machine housing is provided on the limit rod to limit the maximum travel between the upper sliding seat and the lower sliding seat. A retractable folding plate or telescopic rod is further mounted between the upper sliding seat and the lower sliding seat, and two ends of the folding plate or the telescopic rod are respectively connected to the upper sliding seat and the lower sliding seat. The collapsed state of the folding plate or telescopic rod ensures the minimum distance between the upper sliding seat and the lower sliding seat remains unchanged, thereby ensuring an adequate safety distance between the upper roller welding die and the lower roller welding die. The extended state of the folding plate or telescopic rod can also ensure the maximum distance between the upper sliding seat and the lower sliding seat remains unchanged, serving a travel protection function, thus providing a double-safety effect together with the limit rod.

Furthermore, each of the ultrasonic roller welding machines further comprises a roller welding machine base. A machine base guide rail arranged in left-right directions is provided on the roller welding machine base. The machine housing is mounted on the machine base guide rail via a bottom sliding seat. A fastening bolt for fixing the bottom sliding seat onto the machine base guide rail is provided on the bottom sliding seat. This allows adjustment of the distance of the ultrasonic roller welding machine relative to the two side edges of the film, to accommodate the welding of products with different dimensions.

Furthermore, each of the ultrasonic roller welding machines further comprises welding support roller assemblies mounted on front and rear sides of the roller welding machine housing. Each of the welding support roller assemblies comprises a welding support mounting plate, and an upper welding support roller and a lower welding support roller mounted on the welding support mounting plate. A clamping gap for clamping the composite current collector is provided between the upper welding support roller and the lower welding support roller. The welding support roller assemblies help maintain the composite current collector clamped in the clamping gap and the welding gap in a relatively straight state, improving welding quality. The upper welding support roller is movably mounted on the welding support mounting plate up and down via a welding support adjusting sliding seat. A handle connected to and capable of driving the welding support adjusting sliding seat up and down is also mounted on the welding support mounting plate. This allows adjustment of the clamping gap between the upper welding support roller and the lower welding support roller, facilitating accommodation of composite current collectors of different thicknesses.

Furthermore, the edge alignment mechanism comprises a primary edge alignment mechanism and a secondary edge alignment mechanism. The foil unwinding mechanism comprises an A-side foil unwinding mechanism, a B-side foil unwinding mechanism, a C-side foil unwinding mechanism, and a D-side foil unwinding mechanism. The primary edge alignment mechanism for correcting the position of the coil material is respectively provided on the film unwinding mechanism, the A-side foil unwinding mechanism, the B-side foil unwinding mechanism, the C-side foil unwinding mechanism, and the D-side foil unwinding mechanism. The roller pressing and flattening mechanism comprises a front roller pressing and flattening mechanism and a rear roller pressing and flattening mechanism, which are respectively positioned in front of and behind the ultrasonic roller welding mechanism. The secondary edge alignment mechanism for correcting the position of the coil material is respectively provided between the film unwinding mechanism, the A-side foil unwinding mechanism, the B-side foil unwinding mechanism, the C-side foil unwinding mechanism, and the D-side foil unwinding mechanism and the front roller pressing and flattening mechanism. The front roller pressing and flattening mechanism respectively merges and flattens the coil material from the A-side foil unwinding mechanism and the B-side foil unwinding mechanism onto one side of an upper surface and a lower surface of the coil material from the film unwinding mechanism. The front roller pressing and flattening mechanism respectively merges and flattens the coil material from the C-side foil unwinding mechanism and the D-side foil unwinding mechanism onto the other side of the upper surface and the lower surface of the coil material from the film unwinding mechanism. After welding by the ultrasonic roller welding mechanism, a double-sided, double-surfaced foil-reinforced composite current collector film is formed, and the weld marks are then flattened by the rear roller pressing and flattening mechanism.

Furthermore, the primary edge alignment mechanism comprises a first edge alignment sliding seat, a first edge alignment motor, and a first edge alignment sensor. The film unwinding mechanism, the A-side foil unwinding mechanism, the B-side foil unwinding mechanism, the C-side foil unwinding mechanism, and the D-side foil unwinding mechanism are respectively mounted on the first edge alignment sliding seat. The first edge alignment motor is connected to and drives the first edge alignment sliding seat to move along a direction tangential to the conveying direction of the coil material, thereby adjusting the unwinding position of the film unwinding mechanism, the A-side foil unwinding mechanism, the B-side foil unwinding mechanism, the C-side foil unwinding mechanism, or the D-side foil unwinding mechanism. The first edge alignment sensor is used to detect the position of the coil material of the film unwinding mechanism, the A-side foil unwinding mechanism, the B-side foil unwinding mechanism, the C-side foil unwinding mechanism, and the D-side foil unwinding mechanism. The secondary edge alignment mechanism comprises a second edge alignment sliding seat, a second edge alignment motor, and a second edge alignment sensor. A front guide roller and a rear guide roller for conveying the coil material of the film unwinding mechanism, the A-side foil unwinding mechanism, the B-side foil unwinding mechanism, the C-side foil unwinding mechanism, or the D-side foil unwinding mechanism are mounted on the second edge alignment sliding seat. The front guide roller and the rear guide roller are respectively mounted on the front side and the rear side of an upper end surface of the second edge alignment sliding seat. The second edge alignment sensor is positioned below the rear guide roller and is used to detect whether the coil material passing the rear guide roller is offset. The second edge alignment motor is connected to and drives the second edge alignment sliding seat to move or swing, thereby adjusting the conveying position of the coil material of the film unwinding mechanism, the A-side foil unwinding mechanism, the B-side foil unwinding mechanism, the C-side foil unwinding mechanism, and the D-side foil unwinding mechanism. The first and second edge alignment sensors both employ contact-type displacement sensors or proximity switches. If the coil material experiences positional offset during conveyance, the coil material will trigger the contact-type displacement sensor or proximity switch, thereby determining which coil material is offset, facilitating maintenance and correction.

Furthermore, the front roller pressing and flattening mechanism and the rear roller pressing and flattening mechanism each comprise a flattening base, and an upper pressing roller, a lower pressing roller, and two pressing cylinders mounted on the flattening base. A flattening gap for pressing the coil material from the film unwinding mechanism, the A-side foil unwinding mechanism, the B-side foil unwinding mechanism, the C-side foil unwinding mechanism, and the D-side foil unwinding mechanism is provided between the upper pressing roller and the lower pressing roller. Two ends of the upper pressing roller are respectively movably mounted on the flattening base up and down via pressing roller sliding seats. The two pressing cylinders are respectively connected to the pressing roller sliding seats and capable of driving the upper pressing roller up and down, thereby adjusting the size of the flattening gap to achieve the purposes of merging the coil materials and flattening them.

Furthermore, the plurality of guide rollers can include a plurality of active conveying rollers and passive conveying rollers. The plurality of active conveying rollers and passive conveying rollers are arranged between the film unwinding mechanism, the A-side foil unwinding mechanism, the B-side foil unwinding mechanism, the C-side foil unwinding mechanism, and the D-side foil unwinding mechanism and the roller pressing and flattening mechanism, as well as between the roller pressing and flattening mechanism and the winding mechanism. The active conveying rollers and passive conveying rollers assist in conveying the coil materials from the film unwinding mechanism, the A-side foil unwinding mechanism, the B-side foil unwinding mechanism, the C-side foil unwinding mechanism, and the D-side foil unwinding mechanism to the roller pressing and flattening mechanism and the winding mechanism. A plurality of anti-slip rods are provided at intervals around the periphery of the active conveying rollers and passive conveying rollers. On one hand, the anti-slip rods can prevent the coil material from slipping off the active conveying rollers and passive conveying rollers; on the other hand, the anti-slip rods can assist in changing the contact wrap angle between the coil material and the active conveying rollers or passive conveying rollers, making the conveyance of the passive rollers and the coil material more stable. Tension sensors can also be provided on the active conveying rollers or passive conveying rollers to detect whether slippage occurs during the conveyance of each coil material, ensuring consistent conveyance speeds for all coil materials.

Furthermore, the composite current collector double-sided double ultrasonic roller welding system of the present solution also includes a detection mechanism. The detection mechanism comprises a controller, a laser speed and length measuring instrument, a display, a labeling machine, an ultrasonic dust remover, and a plurality of CCD image sensors. The laser speed and length measuring instrument is arranged behind the ultrasonic roller welding mechanism for measuring a conveying speed and length of the double-sided, double-surfaced foil-reinforced composite current collector coil material after welding by the ultrasonic roller welding mechanism. The CCD image sensors, the labeling machine, and the ultrasonic dust remover are sequentially arranged between the ultrasonic roller welding mechanism and the winding mechanism. The CCD image sensors are used for capturing images of the welded double-sided, double-surfaced foil-reinforced composite current collector coil material. The labeling machine is used for labeling the welded double-sided, double-surfaced foil-reinforced composite current collector coil material. The ultrasonic dust remover is used for removing dust from the welded double-sided, double-surfaced foil-reinforced composite current collector coil material. The controller is electrically connected to the laser speed and length measuring instrument, the display, the labeling machine, the ultrasonic dust remover, and the CCD image sensors respectively, and displays image data captured by the CCD image sensors in real-time via the display, facilitating workers in observing and judging the welding condition of the composite film and promptly discovering product defects to correct the production equipment.

Furthermore, the composite current collector double-sided double ultrasonic roller welding system of the present solution also includes a cutting mechanism. The cutting mechanism comprises a splitting machine, two laser tab cutting machines, and at least one set of cutting support rollers. The one set of cutting support rollers is positioned behind the ultrasonic roller welding mechanism for conveying the welded composite current collector film, and the one set of cutting support rollers is arranged horizontally. The two laser tab cutting machines are positioned directly above the one set of cutting support rollers for respectively performing laser cutting on tabs on two sides of the composite current collector film. The splitting machine is positioned between the laser tab cutting machines and the winding mechanism. After the splitting machine cuts the composite current collector film into two, the winding mechanism winds up the composite current collector film.

Furthermore, the composite current collector double-sided double ultrasonic roller welding system of the present solution also includes a housing. A support plate is provided inside the housing. The foil unwinding mechanism, the roller pressing and flattening mechanism, the detection mechanism, etc., are all mounted on the support plate. The film unwinding mechanism is positioned in front of the foil unwinding mechanism, and the winding mechanism is positioned behind the roller pressing and flattening mechanism. A hollowed-out portion for the movement of the ultrasonic roller welding machines is provided on the support plate. Such a rational layout can greatly save the volume and space of the housing, making the structure more compact. A plurality of Fan Filter Units (FFU, which is a self-powered air supply filtration device, a modular terminal air supply device with filtration function) are provided on the top of the housing, ensuring the safety of operating personnel within the welding operation area and maintaining a clean working environment.

Compared with the prior art, the beneficial effects of the present invention are: the present solution employs two ultrasonic roller welding machines to perform double-sided welding on the film, forming a double-sided, double-surfaced foil-reinforced composite current collector, enabling a single device to achieve the work efficiency of two older welding devices synchronously, saving plant floor space, and achieving the purpose of reducing production costs. The present solution adopts a two-stage edge alignment approach in coil material conveyance, capable of correcting and preventing deviations of each coil material during the conveyance process, and is equipped with post-weld detection mechanisms such as CCD image sensors, facilitating workers in observing and judging the welding condition of the composite film, promptly discovering product defects to correct the production equipment, thereby ensuring final winding and welding quality. The structural layout of the present solution is scientifically rational, capable of improving the production efficiency and quality of current collectors.

### BRIEF DESCRIPTION OF THE DRAWINGS

Fig. 1 is a schematic perspective view of the overall structure of Embodiment 1 of the present invention;
Fig. 2 is a schematic plan view of the structural arrangement inside the housing of Embodiment 1 of the present invention;
Figs. 3a and 3b are schematic perspective views of the structure inside the housing of Embodiment 1 of the present invention;
Figs. 4a-4d are schematic structural diagrams of the ultrasonic roller welding machine of Embodiment 1 of the present invention;
Fig. 5 is a schematic perspective view of the structure of the secondary edge alignment mechanism of Embodiment 1 of the present invention;
Fig. 6 is a schematic perspective view of the structure of the front roller pressing and flattening mechanism of Embodiment 1 of the present invention;
Fig. 7 is a schematic perspective view of the structure of the active conveying roller and passive conveying roller of Embodiment 1 of the present invention; and
Fig. 8 is a schematic plan view of the structural arrangement of Embodiment 2 of the present invention.

### DETAILED DESCRIPTION OF THE INVENTION

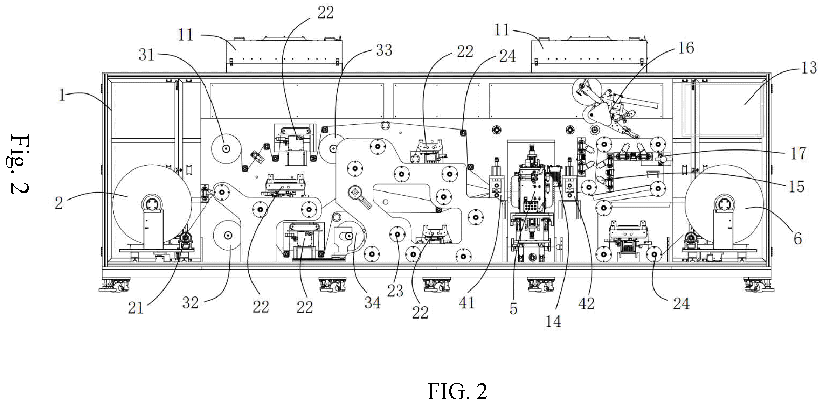

The present invention is further described below in conjunction with the accompanying drawings. It should be noted that these specific embodiments are merely representative specific embodiments of the present invention, and the specific methods, devices, conditions, materials, etc., exemplified therein are not intended to limit the present invention or the corresponding specific embodiments. The descriptions of orientation herein are based on Fig. 2 as a reference standard.

### Embodiment 1

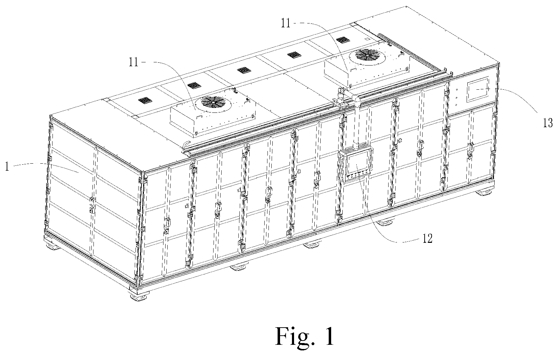

A composite current collector double-sided double ultrasonic roller welding system, as shown in Fig. 1, comprises a closed housing 1. A display 13 and a controller 12 are provided on a left side of the housing 1. Operation buttons and a touch screen are provided on the controller 12. A support plate, a film unwinding mechanism 2, an ultrasonic roller welding mechanism 5, and a winding mechanism 6 are provided inside the housing 1. The support plate is a vertical support plate, which can be mounted on a bracket at the rear inside the housing 1 for various functional mechanism modules. The foil unwinding mechanism and the roller pressing and flattening mechanism, etc., are mounted on the support plate. By rationally arranging the foil unwinding mechanism, roller pressing and flattening mechanism, edge alignment mechanism, and a plurality of guide rollers on the support plate, the conveyance of the film and foil becomes more stable and reliable, and equipment space is saved. The film unwinding mechanism 2 is positioned in front of the foil unwinding mechanism, and the winding mechanism 6 is positioned behind the roller pressing and flattening mechanism. A hollowed-out portion for the operation of the ultrasonic roller welding mechanism 5 is provided on the support plate. A plurality of Fan Filter Units 11 (FFU) are provided on the top of the housing 1. The FFUs 11 supply air into the housing 1, creating a clean welding operation chamber inside the housing 1 to prevent contamination by dust and the like.

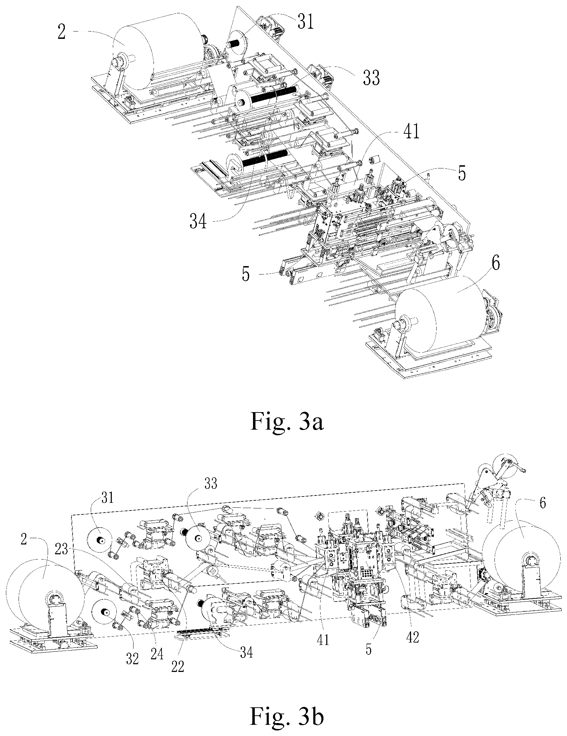

As shown in Figs. 2-3b, in this embodiment, the foil unwinding mechanism comprises an A-side foil unwinding mechanism 31, a B-side foil unwinding mechanism 32, a C-side foil unwinding mechanism 33, and a D-side foil unwinding mechanism 34. In practical applications, the number of foil unwinding mechanisms can be increased or decreased as needed. The roller pressing and flattening mechanism comprises a front roller pressing and flattening mechanism 41 and a rear roller pressing and flattening mechanism 42, which are respectively positioned in front of and behind the ultrasonic roller welding mechanism 5. An edge alignment mechanism and a plurality of guide rollers are respectively provided between the film unwinding mechanism 2, the A-side foil unwinding mechanism 31, the B-side foil unwinding mechanism 32, the C-side foil unwinding mechanism 33, and the D-side foil unwinding mechanism 34 and the front roller pressing and flattening mechanism 41, for respectively subjecting the film and the foils on the upper and lower surfaces to edge alignment adjustment and stretching and flattening by the guide rollers to eliminate corresponding stress, after which they are pressed together by the front roller pressing and flattening mechanism 41 for welding. This can effectively improve welding reliability and yield. The film and foils are bent, stretched, and edge-aligned within a very small space in the housing, effectively saving operating space. Preferably, a primary edge alignment mechanism 21 for correcting the position of the coil material is respectively provided after the film unwinding mechanism 2, the A-side foil unwinding mechanism 31, the B-side foil unwinding mechanism 32, the C-side foil unwinding mechanism 33, and the D-side foil unwinding mechanism 34. A secondary edge alignment mechanism 22 for correcting the position of the coil material is respectively provided between the film unwinding mechanism 2, the A-side foil unwinding mechanism 31, the B-side foil unwinding mechanism 32, the C-side foil unwinding mechanism 33, and the D-side foil unwinding mechanism 34 and the front roller pressing and flattening mechanism 41. The front roller pressing and flattening mechanism 41 respectively merges and flattens the coil material from the A-side foil unwinding mechanism 31 and the B-side foil unwinding mechanism 32 onto one side of an upper surface and a lower surface of the coil material from the film unwinding mechanism 2. The front roller pressing and flattening mechanism 41 respectively merges and flattens the coil material from the C-side foil unwinding mechanism 33 and the D-side foil unwinding mechanism 34 onto the other side of the upper surface and the lower surface of the coil material from the film unwinding mechanism 2. After the merged and flattened film is welded by the ultrasonic roller welding mechanism 5, a double-sided, double-surfaced foil-reinforced composite current collector film is formed, the weld marks are then flattened by the rear roller pressing and flattening mechanism, and finally wound up by the winding mechanism 6. In this embodiment, the film unwinding mechanism 2 consists of a film roll and a film unwinding active roller driven by a motor. The A-side foil unwinding mechanism 31 consists of an A-side foil roll and an A-side foil unwinding active roller driven by a motor. The B-side foil unwinding mechanism 32 consists of a B-side foil roll and a B-side foil unwinding active roller driven by a motor. The C-side foil unwinding mechanism 33 consists of a C-side foil roll and a C-side foil unwinding active roller driven by a motor. The D-side foil unwinding mechanism 34 consists of a D-side foil roll and a D-side foil unwinding active roller driven by a motor. A plurality of active conveying rollers 23 and passive conveying rollers 24 are further provided between the film unwinding mechanism 2, the A-side foil unwinding mechanism 31, the B-side foil unwinding mechanism 32, the C-side foil unwinding mechanism 33, and the D-side foil unwinding mechanism 34 and the front roller pressing and flattening mechanism 41, as well as between the rear roller pressing and flattening mechanism 42 and the winding mechanism 6. The active conveying rollers 23 and passive conveying rollers 24 assist in conveying the coil materials from the film roll, A-side foil roll, B-side foil roll, C-side foil roll, and D-side foil roll to the roller pressing and flattening mechanism and the winding mechanism 6.

Here, the film unwinding mechanism 2 and the winding mechanism 6 are respectively mounted on brackets inside the feed side and discharge side of the housing. The rest, such as the film unwinding mechanism 2, the A-side foil unwinding mechanism 31, the B-side foil unwinding mechanism 32, the C-side foil unwinding mechanism 33, the D-side foil unwinding mechanism 34, the front roller pressing and flattening mechanism 41, the rear roller pressing and flattening mechanism 42, the active conveying rollers 23, and the passive conveying rollers 24, etc., are all mounted on the support plate. In terms of layout, high-power drive equipment is arranged on one side of the support plate, while rollers and shafts pass through to the other side of the support plate for conveying the film material. This greatly saves equipment space and facilitates equipment layout, dust removal, maintenance, and heat dissipation.

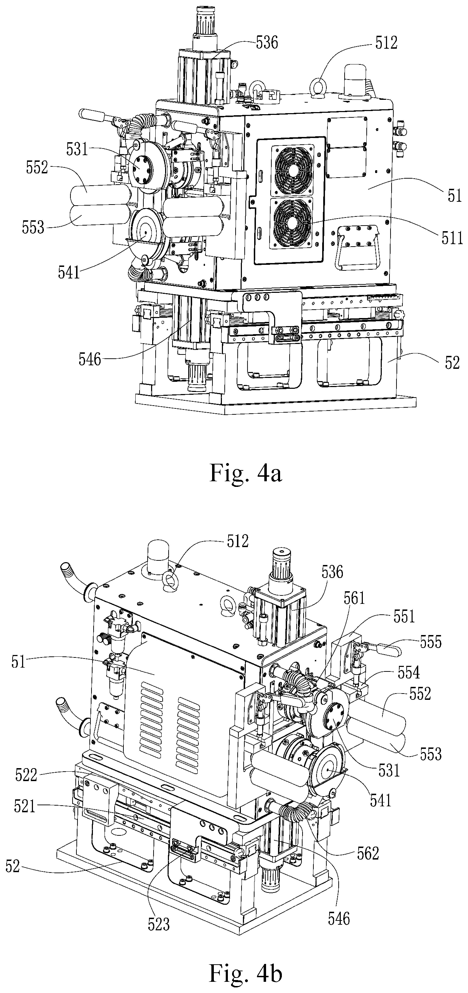

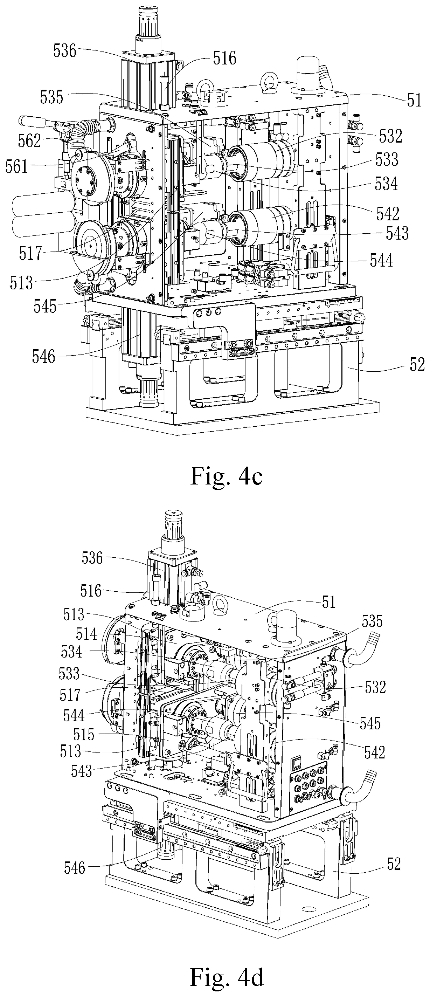

As shown in Figs. 4a-4d, the ultrasonic roller welding mechanism 5 comprises two ultrasonic roller welding machines oppositely arranged on two sides of the film. Each of the ultrasonic roller welding machines comprises a roller welding machine housing 51, a roller welding machine base 52, and an upper roller welding assembly and a lower roller welding assembly mounted on the roller welding machine housing 51. A machine base guide rail 521 arranged in left-right side directions is provided on the roller welding machine base 52. The roller welding machine housing 51 is mounted on the machine base guide rail 521 via a bottom sliding seat 522. A fastening bolt 523 for fixing the bottom sliding seat 522 onto the machine base guide rail 521 is provided on the bottom sliding seat 522. This allows adjustment of the front-rear position of the roller welding machine housing. The two ultrasonic roller welding machines are respectively mounted on both sides of the support plate inside the housing, wherein one ultrasonic roller welding machine passes through the hollowed-out portion, effectively saving installation space.

The upper roller welding assembly comprises an upper roller welding die 531, an upper ultrasonic generator 532, an upper ultrasonic transducer 533, an upper ultrasonic horn 534, and an upper roller welding motor 535. The lower roller welding assembly comprises a lower roller welding die 541, a lower ultrasonic generator 542, a lower ultrasonic transducer 543, a lower ultrasonic horn 544, and a lower roller welding motor 545. The upper ultrasonic generator 532 is connected to the upper roller welding die 531 via the upper ultrasonic transducer 533 and the upper ultrasonic horn 534. The lower ultrasonic generator 542 is connected to the lower roller welding die 541 via the lower ultrasonic transducer 543 and the lower ultrasonic horn 544. The upper roller welding motor 535 and the lower roller welding motor 545 are respectively connected to and drive the upper roller welding die 531 and the lower roller welding die 541 to rotate in different directions for counter-rotation. The lower roller welding die 541 is positioned directly below the upper roller welding die 531, and a welding gap for clamping the composite current collector film is provided between the upper roller welding die 531 and the lower roller welding die 541. An upper driving device 536 and a lower driving device 546 are further mounted on the roller welding machine housing 51. A vertically arranged roller welding machine housing guide rail 513 is mounted on the roller welding machine housing 51. The upper roller welding assembly and the lower roller welding assembly are respectively mounted on the roller welding machine housing guide rail 513 via an upper sliding seat 514 and a lower sliding seat 515. The upper driving device 536 and the lower driving device 546 are respectively connected to and capable of driving the upper sliding seat 514 and the lower sliding seat 515 to slide up and down along the roller welding machine housing guide rail 513, thereby adjusting the welding gap between the upper roller welding die 531 and the lower roller welding die 541 to accommodate welding composite current collectors of different thicknesses. The upper driving device 536 and the lower driving device 546 preferably employ air cylinders, offering the advantages of small size and cleanliness; they could also be hydraulic cylinders or linear reciprocating mechanisms driven by motor connections.

Furthermore, a limit rod 516 is mounted on the upper sliding seat 514 and the lower sliding seat 515. A limit block abutting against the roller welding machine housing 51 is provided on the limit rod 516 to limit the maximum travel between the upper sliding seat 514 and the lower sliding seat 515. A retractable folding plate 517 or telescopic rod is further mounted between the upper sliding seat 514 and the lower sliding seat 515, and two ends of the folding plate 517 or the telescopic rod are respectively connected to the upper sliding seat 514 and the lower sliding seat 515. The collapsed state of the folding plate 517 or telescopic rod ensures the minimum distance between the upper sliding seat 514 and the lower sliding seat 515 remains unchanged, thereby ensuring an adequate safety distance between the upper roller welding die 531 and the lower roller welding die 541. The extended state of the folding plate 517 or telescopic rod can also ensure the maximum distance between the upper sliding seat 514 and the lower sliding seat 515 remains unchanged, serving a travel protection function, thus providing a double-safety effect together with the limit rod 516.

Furthermore, a plurality of heat dissipation hole plates 511 are provided on the roller welding machine housing 51, and cooling fans are mounted on the heat dissipation hole plates 511 to reduce the temperature inside the roller welding machine housing 51.

Furthermore, a scale is provided on the bottom sliding seat 522 for conveniently determining the displacement of the roller welding machine housing 51.

Furthermore, lifting lugs 512 are provided on the roller welding machine housing 51 for convenient hoisting onto the production line.

Furthermore, each of the ultrasonic roller welding machines also includes welding support roller assemblies mounted on front and rear sides of the roller welding machine housing 51. The welding support roller assembly comprises a welding support mounting plate 551, and an upper welding support roller 552 and a lower welding support roller 553 mounted on the welding support mounting plate 551. A clamping gap for clamping the composite current collector is provided between the upper welding support roller 552 and the lower welding support roller 553. The welding support roller assemblies help maintain the composite current collector clamped in the clamping gap and the welding gap in a relatively straight state, improving welding quality. The upper welding support roller 552 is movably mounted on the welding support mounting plate 551 up and down via an adjusting sliding seat 554. A handle 555 connected to and capable of driving the adjusting sliding seat 554 up and down is also mounted on the welding support mounting plate 551. This allows adjustment of the clamping gap between the upper welding support roller 552 and the lower welding support roller 553, facilitating accommodation of composite current collectors of different thicknesses.

Furthermore, an air nozzle 561 and a waste suction pipe 562 aimed at the upper roller welding die and the lower roller welding die are also mounted on the roller welding machine housing 51 to remove adhesive substances from the roller welding dies.

Furthermore, the primary edge alignment mechanism 21 comprises a first edge alignment sliding seat, a first edge alignment motor, and a first edge alignment sensor. The film unwinding mechanism, the A-side foil unwinding mechanism, the B-side foil unwinding mechanism, the C-side foil unwinding mechanism, and the D-side foil unwinding mechanism are respectively mounted on the first edge alignment sliding seat. The first edge alignment motor is connected to and drives the first edge alignment sliding seat to move along a direction tangential to the conveying direction of the coil material, thereby adjusting the unwinding position of the film unwinding mechanism, the A-side foil unwinding mechanism, the B-side foil unwinding mechanism, the C-side foil unwinding mechanism, or the D-side foil unwinding mechanism. The first edge alignment sensor is used to detect the position of the coil material of the film unwinding mechanism, the A-side foil unwinding mechanism, the B-side foil unwinding mechanism, the C-side foil unwinding mechanism, and the D-side foil unwinding mechanism.

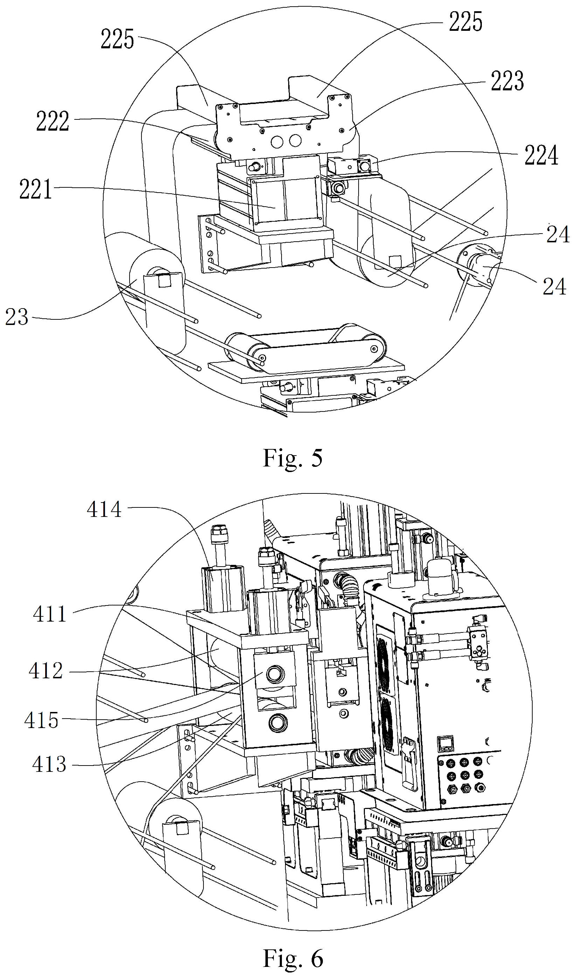

As shown in Fig. 5, furthermore, the secondary edge alignment mechanism 22 comprises a second edge alignment sliding seat 221, a second edge alignment motor, and a second edge alignment sensor 224. A front guide roller 222 and a rear guide roller 223 for conveying the coil material of the film unwinding mechanism, the A-side foil unwinding mechanism, the B-side foil unwinding mechanism, the C-side foil unwinding mechanism, or the D-side foil unwinding mechanism are mounted on the second edge alignment sliding seat. The front guide roller 222 and the rear guide roller 223 are respectively mounted on the front side and the rear side of an upper end surface of the second edge alignment sliding seat 221. The second edge alignment sensor 224 is positioned below the rear guide roller 223 and is used to detect whether the coil material passing the rear guide roller 223 is offset. The second edge alignment motor is connected to and drives the second edge alignment sliding seat 221 to move or swing, thereby adjusting the conveying position of the coil material of the film unwinding mechanism, the A-side foil unwinding mechanism, the B-side foil unwinding mechanism, the C-side foil unwinding mechanism, and the D-side foil unwinding mechanism. The first and second edge alignment sensors both employ contact-type displacement sensors or proximity switches. If the coil material experiences positional offset during conveyance, the coil material will trigger the contact-type displacement sensor or proximity switch, thereby determining which coil material is offset, facilitating maintenance and correction. A limit block 225 for limiting the position of the coil material from the film roll, A-side foil roll, B-side foil roll, C-side foil roll, and D-side foil roll can also be provided on the second edge alignment sliding seat 221. A gap allowing only coil material of standard dimensions to pass through is provided between the limit block 225 and the front guide roller 222 and the rear guide roller 223 to prevent the coil material from deviating during conveyance. In practical applications, the primary edge alignment mechanism 21 and the secondary edge alignment mechanism 22 can also utilize edge aligners from the prior art, or common intelligent edge alignment devices or infrared online coil material deviation detection devices available on the market.

As shown in Fig. 6, furthermore, the front roller pressing and flattening mechanism 41 and the rear roller pressing and flattening mechanism 42 each comprise a flattening base 411, and an upper pressing roller 412, a lower pressing roller 413, and two pressing cylinders 414 mounted on the flattening base 411. A flattening gap for pressing the coil material from the film roll, A-side foil roll, B-side foil roll, C-side foil roll, and D-side foil roll is provided between the upper pressing roller 412 and the lower pressing roller 413. Two ends of the upper pressing roller 412 are respectively movably mounted on the flattening base 411 up and down via sliding seats 415. The two pressing cylinders 414 are respectively connected to the sliding seats 415 and capable of driving the upper pressing roller 412 up and down, thereby adjusting the size of the flattening gap to achieve the purposes of merging the coil materials and flattening them.

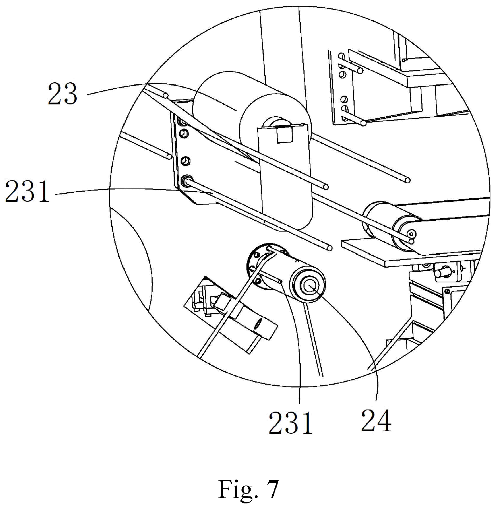

As shown in Fig. 7, furthermore, the plurality of guide rollers can include a plurality of active conveying rollers 23 and passive conveying rollers 24. A plurality of anti-slip rods 231 are provided at intervals around the periphery of the active conveying rollers 23 and passive conveying rollers 24. On one hand, the anti-slip rods 231 can prevent the coil material from slipping off the active conveying rollers 23 and passive conveying rollers 24; on the other hand, the anti-slip rods 231 can assist in changing the contact wrap angle between the coil material and the active conveying rollers 23 or passive conveying rollers 24, making the conveyance of the passive rollers and the coil material more stable. Tension sensors can also be provided on the active conveying rollers 23 or passive conveying rollers 24 to detect whether slippage occurs during the conveyance of each coil material, ensuring consistent conveyance speeds for all coil materials.

Furthermore, the composite current collector double-sided double ultrasonic roller welding system of the present solution also includes a detection mechanism. The detection mechanism comprises the controller 12, a laser speed and length measuring instrument 14, a display 13, a labeling machine 16, an ultrasonic dust remover 17, and a plurality of CCD image sensors 15. The laser speed and length measuring instrument 14 is arranged behind the ultrasonic roller welding mechanism 5 for measuring a conveying speed and length of the double-sided, double-surfaced foil-reinforced composite current collector coil material after welding by the ultrasonic roller welding mechanism 5. The CCD image sensors 15, the labeling machine 16, and the ultrasonic dust remover 17 are sequentially arranged between the ultrasonic roller welding mechanism 5 and the winding mechanism 6. The CCD image sensors 15 are used for capturing images of the welded double-sided, double-surfaced foil-reinforced composite current collector coil material. The labeling machine 16 is used for labeling the welded double-sided, double-surfaced foil-reinforced composite current collector coil material. The ultrasonic dust remover 17 is used for removing dust from the welded double-sided, double-surfaced foil-reinforced composite current collector coil material. The controller 12 is electrically connected to the laser speed and length measuring instrument 14, the display 13, the labeling machine 16, the ultrasonic dust remover 17, and the CCD image sensors 15 respectively, and displays image data captured by the CCD image sensors 15 in real-time via the display 13, facilitating workers in observing and judging the welding condition of the composite film and promptly discovering product defects to correct the production equipment. The CCD image sensors 15 include a plurality of first CCD image sensors, a plurality of second CCD image sensors, and a plurality of third CCD image sensors. The first CCD image sensors are arranged on both sides of the double-sided, double-surfaced foil-reinforced composite current collector coil material for monitoring the welding condition on both surfaces of the composite film. The second CCD image sensors are arranged below the labeling machine 16 for monitoring the labeling condition of the labeling machine 16. The third CCD image sensors cooperate with a spotlight for use in detecting the light transmittance at the weld joints of the composite film; if the light transmittance at a weld joint is below 30%, a defect of weak welding exists at that location.

The present solution employs two ultrasonic roller welding machines to perform double-sided welding on the film, forming a double-sided, double-surfaced foil-reinforced composite current collector, enabling a single device to achieve the work efficiency of two older welding devices synchronously, saving plant floor space, and achieving the purpose of reducing production costs. The present solution adopts a two-stage edge alignment approach in coil material conveyance, capable of correcting and preventing deviations of each coil material during the conveyance process, and is equipped with post-weld detection mechanisms such as CCD image sensors, facilitating workers in observing and judging the welding condition of the composite film, promptly discovering product defects to correct the production equipment, thereby ensuring final winding and welding quality. As shown in Table 1 below, in practical applications, test welding was conducted on pure copper foil and pure aluminum foil using this solution, and welding efficiency reached 80 meters/minute. The widths of Group A and Group B foils were both 3mm. The tensile force requirement during conveyance for Group A and Group B foils was not less than 15N for a 25mm length when pulled horizontally. The physical thickness of Group A foil was 0.0185mm, and the measured thickness after welding was 0.019mm. The physical thickness of Group B foil was 0.032mm, and the measured thickness after welding was 0.032mm. The errors meet the requirements.

**Table 1**

| No. | Test Welding Process | Speed (m/min) | Air Pressure (bar) | | Welding Machine Power (%) | | Welding Amplitude (UM) | | No-load Current (A) | | Load Current (A) | | Tensile Force (N) | Internal Resistance (mΩ) | Successful Test Welding |
|---|---|---|---|---|---|---|---|---|---|---|---|---|---|---|---|
| | | | Upp er | Lowe r | Upp er | Low er | Upp er | Lo wer | Upp er | Lowe r | Uppe r | Lowe r | | | |
| A | Pure copper foil 6 UM + PET composite copper foil 6.5 UM + Pure copper foil 6 UM | 80 | 2 | 2 | 35% | 15% | 2 | 1 | 0.2 | 0.2 | 0.8 | 0.5 | 14.3 | 2.44 | Yes |
| B | Pure aluminum foil 12 UM + PET composite aluminum foil 8 UM + Pure aluminum foil 12 UM | 80 | 2 | 2 | 25% | 15% | 2 | 1 | 0.2 | 0.2 | 0.5 | 0.5 | 19.56 | 1.17 | Yes |

### Embodiment 2

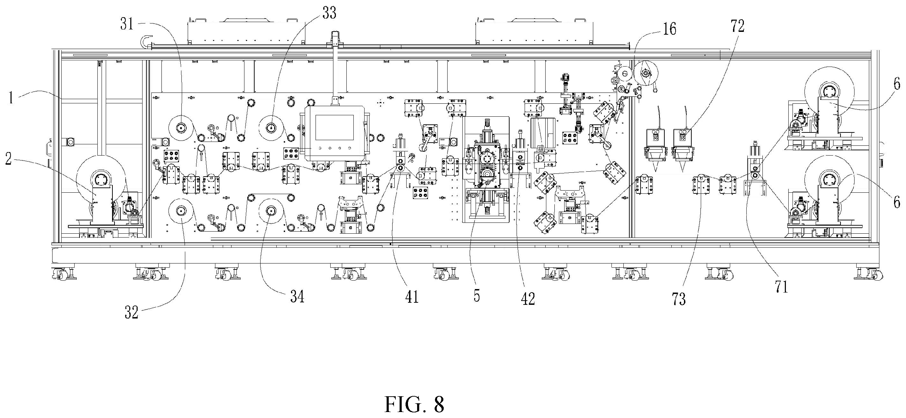

A composite current collector double-sided double ultrasonic roller welding system, comprising a housing 1, and a film unwinding mechanism 2, a foil unwinding mechanism, a roller pressing and flattening mechanism, an ultrasonic roller welding mechanism 5, a winding mechanism 6, etc., provided inside the housing 1. As shown in Fig. 8, the difference between this embodiment and Embodiment 1 lies in a slight change in the arrangement of the conveying rollers and the inclusion of a cutting mechanism. The cutting mechanism comprises a splitting machine 71, two laser tab cutting machines 72, and at least one set of cutting support rollers 73. The one set of cutting support rollers 73 is positioned behind the detection mechanism for conveying the composite current collector film, and the one set of cutting support rollers 73 is arranged horizontally. The two laser tab cutting machines 72 are positioned directly above the one set of cutting support rollers 73 for respectively performing laser cutting on tabs on two sides of the composite current collector film. The splitting machine 71 is positioned between the laser tab cutting machines 72 and the winding mechanism 6. In this embodiment, the number of winding mechanisms 6 is two. After the splitting machine 71 cuts the composite current collector film into two, the two winding mechanisms 6 respectively wind up the cut composite current collector films. This solution integrates the tab laser cutting process and the slitting process, perfecting the process for automated production of current collectors and improving the production efficiency of current collectors.

The foregoing descriptions are merely preferred embodiments of the present invention and should not be used to limit the scope of implementation of the present invention. That is, any simple equivalent changes and modifications made based on the claims and the content of the description of the present invention shall still fall within the scope covered by the patent of the present invention.

## Claims

1. A composite current collector double-sided double ultrasonic roller welding system, comprising a film unwinding mechanism, a foil unwinding mechanism, a roller pressing and flattening mechanism, an ultrasonic roller welding mechanism, and a winding mechanism, wherein an edge alignment mechanism and a plurality of guide rollers are respectively provided between the film unwinding mechanism/foil unwinding mechanism and the roller pressing and flattening mechanism; the film unwinding mechanism and the foil unwinding mechanism respectively deliver a film and a foil, which are subjected to edge alignment adjustment by the edge alignment mechanism and stretched and flattened by the guide rollers, after which they are pressed together by the roller pressing and flattening mechanism; subsequently, the ultrasonic roller welding mechanism performs welding to form a composite current collector film, which is then wound up by the winding mechanism.

2. The composite current collector double-sided double ultrasonic roller welding system according to claim 1, wherein the ultrasonic roller welding mechanism comprises two ultrasonic roller welding machines oppositely arranged on two sides of the film; each of the ultrasonic roller welding machines comprises a roller welding machine housing, and an upper roller welding assembly, a lower roller welding assembly, an upper driving device, and a lower driving device mounted on the roller welding machine housing; the upper roller welding assembly comprises an upper roller welding die, an upper ultrasonic generator, an upper ultrasonic transducer, an upper ultrasonic horn, and an upper roller welding motor; the lower roller welding assembly comprises a lower roller welding die, a lower ultrasonic generator, a lower ultrasonic transducer, a lower ultrasonic horn, and a lower roller welding motor; the upper ultrasonic generator is connected to the upper roller welding die via the upper ultrasonic transducer and the upper ultrasonic horn; the lower ultrasonic generator is connected to the lower roller welding die via the lower ultrasonic transducer and the lower ultrasonic horn; the upper roller welding motor and the lower roller welding motor are respectively connected to and drive the upper roller welding die and the lower roller welding die to rotate in different directions; the lower roller welding die is positioned directly below the upper roller welding die, and a welding gap for clamping the composite current collector film is provided between the upper roller welding die and the lower roller welding die; a vertically arranged machine housing guide rail is further mounted on the roller welding machine housing; the upper roller welding assembly and the lower roller welding assembly are respectively mounted on the machine housing guide rail via an upper sliding seat and a lower sliding seat; the upper driving device and the lower driving device are respectively connected to and capable of driving the upper sliding seat and the lower sliding seat to slide up and down along the machine housing guide rail, thereby adjusting the welding gap between the upper roller welding die and the lower roller welding die.

3. The composite current collector double-sided double ultrasonic roller welding system according to claim 1, wherein a limit rod is mounted on the upper sliding seat and the lower sliding seat, and a limit block abutting against the machine housing is provided on the limit rod; a retractable folding plate or telescopic rod is further mounted between the upper sliding seat and the lower sliding seat, and two ends of the folding plate or the telescopic rod are respectively connected to the upper sliding seat and the lower sliding seat.

4. The composite current collector double-sided double ultrasonic roller welding system according to claim 1, wherein each of the ultrasonic roller welding machines further comprises a roller welding machine base, a machine base guide rail arranged in left-right directions is provided on the roller welding machine base, the machine housing is mounted on the machine base guide rail via a bottom sliding seat, and a fastening bolt for fixing the bottom sliding seat onto the machine base guide rail is provided on the bottom sliding seat.

5. The composite current collector double-sided double ultrasonic roller welding system according to claim 1, wherein each of the ultrasonic roller welding machines further comprises welding support roller assemblies mounted on front and rear sides of the roller welding machine housing; each of the welding support roller assemblies comprises a welding support mounting plate, and an upper welding support roller and a lower welding support roller mounted on the welding support mounting plate; the upper welding support roller is movably mounted on the welding support mounting plate up and down via a welding support adjusting sliding seat; a handle connected to and capable of driving the welding support adjusting sliding seat up and down is mounted on the welding support mounting plate; and a clamping gap for clamping the composite current collector film is provided between the upper welding support roller and the lower welding support roller.

6. The composite current collector double-sided double ultrasonic roller welding system according to claim 1, wherein the edge alignment mechanism comprises a primary edge alignment mechanism and a secondary edge alignment mechanism; the foil unwinding mechanism comprises an A-side foil unwinding mechanism, a B-side foil unwinding mechanism, a C-side foil unwinding mechanism, and a D-side foil unwinding mechanism; the primary edge alignment mechanism for correcting the position of the coil material is respectively provided on the film unwinding mechanism, the A-side foil unwinding mechanism, the B-side foil unwinding mechanism, the C-side foil unwinding mechanism, and the D-side foil unwinding mechanism; the roller pressing and flattening mechanism comprises a front roller pressing and flattening mechanism and a rear roller pressing and flattening mechanism, which are respectively positioned in front of and behind the ultrasonic roller welding mechanism; the secondary edge alignment mechanism for correcting the position of the coil material is respectively provided between the film unwinding mechanism, the A-side foil unwinding mechanism, the B-side foil unwinding mechanism, the C-side foil unwinding mechanism, and the D-side foil unwinding mechanism and the front roller pressing and flattening mechanism; the front roller pressing and flattening mechanism respectively merges and flattens the coil material from the A-side foil unwinding mechanism and the B-side foil unwinding mechanism onto one side of an upper surface and a lower surface of the coil material from the film unwinding mechanism; the front roller pressing and flattening mechanism respectively merges and flattens the coil material from the C-side foil unwinding mechanism and the D-side foil unwinding mechanism onto the other side of the upper surface and the lower surface of the coil material from the film unwinding mechanism; after welding by the ultrasonic roller welding mechanism, a double-sided, double-surfaced foil-reinforced composite current collector film is formed, and the weld marks are then flattened by the rear roller pressing and flattening mechanism.

7. The composite current collector double-sided double ultrasonic roller welding system according to claim 6, wherein the front roller pressing and flattening mechanism and the rear roller pressing and flattening mechanism each comprise a flattening base, and an upper pressing roller, a lower pressing roller, and a pressing cylinder mounted on the flattening base; two ends of the upper pressing roller are respectively movably mounted on the flattening base up and down via pressing roller sliding seats; the pressing cylinder is connected to the pressing roller sliding seats and capable of driving the upper pressing roller up and down; and a flattening gap for pressing the coil material from the film unwinding mechanism, the A-side foil unwinding mechanism, the B-side foil unwinding mechanism, the C-side foil unwinding mechanism, and the D-side foil unwinding mechanism is provided between the upper pressing roller and the lower pressing roller.

8. The composite current collector double-sided double ultrasonic roller welding system according to claim 1, wherein the system further comprises a cutting mechanism, the cutting mechanism comprising a splitting machine, two laser tab cutting machines, and at least one set of cutting support rollers; the one set of cutting support rollers is positioned behind the ultrasonic roller welding mechanism for conveying the welded composite current collector film, and the one set of cutting support rollers is arranged horizontally; the two laser tab cutting machines are positioned directly above the one set of cutting support rollers for respectively performing laser cutting on tabs on two sides of the composite current collector film; the splitting machine is positioned between the laser tab cutting machines and the winding mechanism, and after the splitting machine cuts the composite current collector film into two, the winding mechanism winds up the composite current collector film.

9. The composite current collector double-sided double ultrasonic roller welding system according to any one of claims 1-8, wherein the system further comprises a detection mechanism, the detection mechanism comprising a controller, a laser speed and length measuring instrument, a display, a labeling machine, an ultrasonic dust remover, and a plurality of CCD image sensors; the laser speed and length measuring instrument is arranged behind the ultrasonic roller welding mechanism for measuring a conveying speed and length of the double-sided, double-surfaced foil-reinforced composite current collector coil material after welding by the ultrasonic roller welding mechanism; the CCD image sensors, the labeling machine, and the ultrasonic dust remover are sequentially arranged between the ultrasonic roller welding mechanism and the winding mechanism; the CCD image sensors are used for capturing images of the welded double-sided, double-surfaced foil-reinforced composite current collector coil material; the labeling machine is used for labeling the welded double-sided, double-surfaced foil-reinforced composite current collector coil material; the ultrasonic dust remover is used for removing dust from the welded double-sided, double-surfaced foil-reinforced composite current collector coil material; the controller is electrically connected to the laser speed and length measuring instrument, the display, the labeling machine, the ultrasonic dust remover, and the CCD image sensors respectively, and displays image data captured by the CCD image sensors in real-time via the display.

10. The composite current collector double-sided double ultrasonic roller welding system according to any one of claims 1-8, wherein the system further comprises a housing, a support plate is provided inside the housing, the foil unwinding mechanism and the roller pressing and flattening mechanism are mounted on the support plate, the film unwinding mechanism is positioned in front of the foil unwinding mechanism, the winding mechanism is positioned behind the roller pressing and flattening mechanism, a hollowed-out portion for the movement of the ultrasonic roller welding machines is provided on the support plate, and a plurality of fan filter units are provided on the top of the housing.
